# EUROPEAN PATENT APPLICATION

(11) **EP 4 817 927 A1**
(43) Date of publication of application: **07.10.2026**
(21) Application number: 25766867.3
(22) Date of filing: 13.05.2025
(51) Int. Cl.: B60K 37/10

(54) **DASHBOARD ASSEMBLY ADJUSTMENT STRUCTURE, DASHBOARD ASSEMBLY, AND VEHICLE**

(30) Priority: 14.01.2025 CN 202520084034 U
(71) Applicant: Zhengzhou Senpeng Electronics Technology Co., Ltd., Zhengzhou Hi-Tech Industrial Development Zone Zhengzhou, Henan 450001 (CN)
(72) Inventor: DONG, Shesen, Zhengzhou, Henan 450001 (CN); DING, Junlei, Zhengzhou, Henan 450001 (CN); LOU, Yanlong, Zhengzhou, Henan 450001 (CN); LI, Jin, Zhengzhou, Henan 450001 (CN); ZHAN, Chunlei, Zhengzhou, Henan 450001 (CN)
(74) Representative: Gulde & Partner
(86) International application number: PCT/CN2025/094451
(87) International publication number: WO 2026/152596

(57) **Abstract**

This application belongs to the field of vehicle technologies, and provides an adjustment structure for a dashboard assembly, the dashboard assembly, and a vehicle. The adjustment structure for a dashboard assembly includes a base fixedly connected to a vehicle body and a connecting bracket connecting a dashboard and a directional tubular column. The base includes two guide plates, namely, a left guide plate and a right guide plate. A linkage base is disposed between the two guide plates along an up-down direction in a guiding manner. The linkage base is hingedly connected to left and right sides of the connecting bracket by using a hinged part. A height adjustment drive mechanism used to drive the linkage base and the connecting bracket to move up and down is connected between the linkage base and the base. An angle adjustment drive mechanism used to drive the connecting bracket to swing back and forth around the hinged part is connected between the linkage base and the connecting bracket. In this application, force exerted on the linkage base and the connecting bracket is more centered, so that a sticking risk can be reduced. In addition, the angle adjustment drive mechanism is connected to one linkage base, so that a connection structure is simplified. In addition, the angle adjustment drive mechanism has a simpler structure, so that configuration costs can be reduced and assembly operations can be simplified.

## Description

### TECHNICAL FIELD

This application belongs to the field of vehicle technologies, and relates to an adjustment structure for a dashboard assembly, the dashboard assembly, and a vehicle.

### BACKGROUND

Comfort of a driving area is related to occupational health of a driver, and is very important for a bus. Currently, buses with domestic mainstream configuration all have an adjustment structure for a dashboard assembly. By adjusting upper and lower heights and front and rear angles of the dashboard assembly, all drivers with different heights and body shapes can carry out driving activities in a healthy and comfortable posture.

For example, the Chinese utility model patent with the authorization publication number No. CN221562807U discloses an adjustment structure for a dashboard assembly and a vehicle. The adjustment structure for a dashboard assembly includes a base fixedly connected to a vehicle body, a connecting bracket connecting a dashboard and a directional tubular column, and a linkage bracket connected to the connecting bracket and moving up and down with the connecting bracket. A height adjustment drive mechanism used to drive the connecting bracket to move up and down is mounted between the base and the connecting bracket, and an angle adjustment drive mechanism used to drive the connecting bracket to swing back and forth around a connecting position between the connecting bracket and the height adjustment drive mechanism is connected between the connecting bracket and the linkage bracket. During use, under control of the height adjustment drive mechanism, the connecting bracket and the linkage bracket move up and down to adjust heights of the dashboard and a steering wheel, and the angle adjustment drive mechanism moves up and down with the connecting bracket and the linkage bracket. After the connecting bracket moves to a target height position, the angle adjustment drive mechanism is started to drive the connecting bracket to swing back and forth around the connecting position between the connecting bracket and the height adjustment drive mechanism, to adjust front and rear angles of the dashboard and the steering wheel.

There are two aforementioned linkage brackets respectively disposed on exterior portions of left and right sides of the base. In this case, there is a relatively large quantity of parts. In addition, both left and right ends of the angle adjustment drive mechanism need to be hingedly connected to corresponding linkage brackets, resulting in a complex connection structure. In addition, the two linkage brackets, two guide plates of the base and two connecting arms of the connecting bracket are respectively connected by using bolts, and an output end of the height adjustment drive mechanism is hingedly connected to a bolt on only one side. Consequently, force exerted by the output end is offset in a left-right direction, and during height adjustment, force exerted on the connecting bracket is not centered in a left-right direction, thereby easily causing the connecting bracket to get stuck. In addition, the angle adjustment drive mechanism includes two output ends. Although the two output ends are respectively hingedly connected to the two side connecting arms of the connecting bracket, so that the force exerted on the connecting bracket is relatively centered during angle adjustment, the angle adjustment drive mechanism has a relatively complex structure, therefore configuration cost is high and assembly operation is complex.

### SUMMARY

An objective of this application is to provide an adjustment structure for a dashboard assembly, to resolve problems in an existing technology that there is a relatively large quantity of parts because two linkage brackets are disposed, a connection structure is complex because both left and right ends of an angle adjustment drive mechanism need to be hingedly connected to corresponding linkage brackets, and force exerted on a connecting bracket in a left-right direction is not centered and sticking easily occurs because an output end of a height adjustment drive mechanism is hingedly connected to a bolt on only one side. An objective of this application is further to provide a dashboard assembly and a vehicle, to resolve the foregoing problems.

To achieve the foregoing objectives, the adjustment structure for a dashboard assembly in this application uses the following technical solution:
An adjustment structure for a dashboard assembly includes a base fixedly connected to a vehicle body and a connecting bracket connecting a dashboard and a directional tubular column, where the base includes two guide plates, namely, a left guide plate and a right guide plate, a linkage base is disposed between the two guide plates along an up-down direction in a guiding manner, the linkage base is hingedly connected to left and right sides of the connecting bracket by using a hinged part, a height adjustment drive mechanism used to drive the linkage base and the connecting bracket to move up and down is connected between the linkage base and the base, and an angle adjustment drive mechanism used to drive the connecting bracket to swing back and forth around the hinged part is connected between the linkage base and the connecting bracket.

Beneficial effects of the foregoing technical solution are as follows: This application belongs to an invention of a change in an element relationship, a quantity and disposition positions of linkage brackets in an existing technology are changed, and only one linkage base is disposed, thereby reducing a quantity of parts. Specifically, the linkage base is disposed between the two guide plates along an up-down direction in a guiding manner, and the linkage base is hingedly connected to the left and right sides of the connecting bracket by using the hinged part. The height adjustment drive mechanism is connected between the linkage base and the base. The height adjustment drive mechanism first exerts force on the linkage base, and the linkage base then transmits the force to the connecting bracket. Because the linkage base is located between the two guide plates, the force exerted on the connecting bracket is more centered in a left-right direction compared to the existing technology, so that a sticking risk can be reduced. In addition, the angle adjustment drive mechanism used to drive the connecting bracket to swing back and forth around the hinged part is connected between the linkage base and the connecting bracket. The angle adjustment drive mechanism is connected to one linkage base. Compared with the existing technology in which two linkage brackets need to be connected, a connection structure is simplified.

Further, there are a left guiding fit point and a right guiding fit point between the linkage base and the base, and a connecting portion between the height adjustment drive mechanism and the linkage base is located at a middle portion between the left guiding fit point and the right guiding fit point in a left-right direction.

Further, the connecting portion between the height adjustment drive mechanism and the linkage base is located at precise center between the left guiding fit point and the right guiding fit point in a left-right direction.

Further, the left guiding fit point and the right guiding fit point are respectively located on the left guide plate and the right guide plate.

Further, the height adjustment drive mechanism includes a height adjustment motor hingedly connected to the base and a height adjustment screw driven by the height adjustment motor to rotate, a rotatable height adjustment rotating block is mounted at a middle portion of the linkage base in a left-right direction, the height adjustment screw extends through the height adjustment rotating block and is threadedly fit with the height adjustment rotating block, and a rotating axis of the height adjustment rotating block and a hinged axis of the height adjustment motor both extend along a left-right direction.

Further, the height adjustment rotating block includes a connecting portion and mounting portions located at left and right ends of the connecting portion, a threaded hole threadedly fit with the height adjustment screw is disposed on the connecting portion, a pair of clamping blocks is fixed on the linkage base, the mounting portions at two ends of the height adjustment rotating block are respectively located between the pair of clamping blocks and the linkage base, and rotational fit is performed both between the mounting portion and the clamping block and between the mounting portion and the linkage base by using arc surfaces.

Further, the angle adjustment drive mechanism includes an angle adjustment motor hingedly connected to the connecting bracket and an angle adjustment screw driven by the angle adjustment motor to rotate, a rotatable angle adjustment rotating block is mounted at the middle portion of the linkage base in a left-right direction and on a side facing away from the height adjustment rotating block, the angle adjustment screw extends through the angle adjustment rotating block and is threadedly fit with the angle adjustment rotating block, and a rotating axis of the angle adjustment rotating block and a hinged axis of the angle adjustment motor both extend along a left-right direction.

Further, the angle adjustment drive mechanism includes an angle adjustment motor hingedly connected to the connecting bracket and an angle adjustment screw driven by the angle adjustment motor to rotate, a rotatable angle adjustment rotating block is mounted on the linkage base, the angle adjustment screw extends through the angle adjustment rotating block and is threadedly fit with the angle adjustment rotating block, and a rotating axis of the angle adjustment rotating block and a hinged axis of the angle adjustment motor both extend along a left-right direction.

Further, the angle adjustment rotating block includes a connecting portion and mounting portions located at left and right ends of the connecting portion, a threaded hole threadedly fit with the angle adjustment screw is disposed on the connecting portion, a pair of clamping blocks is fixed on the linkage base, the mounting portions at two ends of the angle adjustment rotating block are respectively located between the pair of clamping blocks and the linkage base, and rotational fit is performed both between the mounting portion and the clamping block and between the mounting portion and the linkage base by using arc surfaces.

Further, the linkage base includes two linkage side walls, namely, a left linkage side wall and a right linkage side wall, a hinged arm hingedly connected to the connecting bracket is respectively disposed on each of the two linkage side walls, and the two linkage side walls are respectively fit with the guide plates in an up-down direction in a guiding manner.

To achieve the foregoing objectives, a dashboard assembly in this application uses the following technical solution:
A dashboard assembly includes a dashboard, a directional tubular column, and an adjustment structure configured to adjust heights and front and rear angles of the dashboard and the directional tubular column. The adjustment structure includes a base fixedly connected to a vehicle body and a connecting bracket connecting the dashboard and the directional tubular column, where the base includes two guide plates, namely, a left guide plate and a right guide plate, a linkage base is disposed between the two guide plates along an up-down direction in a guiding manner, the linkage base is hingedly connected to left and right sides of the connecting bracket by using a hinged part, a height adjustment drive mechanism used to drive the linkage base and the connecting bracket to move up and down is connected between the linkage base and the base, and an angle adjustment drive mechanism used to drive the connecting bracket to swing back and forth around the hinged part is connected between the linkage base and the connecting bracket.

Beneficial effects of the foregoing technical solution are as follows: This application belongs to an improved invention, and further defines the adjustment structure. Only one linkage base is disposed on the adjustment structure, thereby reducing a quantity of parts. Specifically, the linkage base is disposed between the two guide plates along an up-down direction in a guiding manner, and the linkage base is hingedly connected to the left and right sides of the connecting bracket by using the hinged part. The height adjustment drive mechanism is connected between the linkage base and the base. The height adjustment drive mechanism first exerts force on the linkage base, and the linkage base then transmits the force to the connecting bracket. Because the linkage base is located between the two guide plates, the force exerted on the connecting bracket is more centered in a left-right direction compared to the existing technology, so that a sticking risk can be reduced. In addition, the angle adjustment drive mechanism used to drive the connecting bracket to swing back and forth around the hinged part is connected between the linkage base and the connecting bracket. The angle adjustment drive mechanism is connected to one linkage base. Compared with the existing technology in which two linkage brackets need to be connected, a connection structure is simplified.

Further, there are a left guiding fit point and a right guiding fit point between the linkage base and the base, and a connecting portion between the height adjustment drive mechanism and the linkage base is located at a middle portion between the left guiding fit point and the right guiding fit point in a left-right direction.

Further, the connecting portion between the height adjustment drive mechanism and the linkage base is located at precise center between the left guiding fit point and the right guiding fit point in a left-right direction.

Further, the left guiding fit point and the right guiding fit point are respectively located on the left guide plate and the right guide plate.

Further, the height adjustment drive mechanism includes a height adjustment motor hingedly connected to the base and a height adjustment screw driven by the height adjustment motor to rotate, a rotatable height adjustment rotating block is mounted at a middle portion of the linkage base in a left-right direction, the height adjustment screw extends through the height adjustment rotating block and is threadedly fit with the height adjustment rotating block, and a rotating axis of the height adjustment rotating block and a hinged axis of the height adjustment motor both extend along a left-right direction.

Further, the height adjustment rotating block includes a connecting portion and mounting portions located at left and right ends of the connecting portion, a threaded hole threadedly fit with the height adjustment screw is disposed on the connecting portion, a pair of clamping blocks is fixed on the linkage base, the mounting portions at two ends of the height adjustment rotating block are respectively located between the pair of clamping blocks and the linkage base, and rotational fit is performed both between the mounting portion and the clamping block and between the mounting portion and the linkage base by using arc surfaces.

Further, the angle adjustment drive mechanism includes an angle adjustment motor hingedly connected to the connecting bracket and an angle adjustment screw driven by the angle adjustment motor to rotate, a rotatable angle adjustment rotating block is mounted at the middle portion of the linkage base in a left-right direction and on a side facing away from the height adjustment rotating block, the angle adjustment screw extends through the angle adjustment rotating block and is threadedly fit with the angle adjustment rotating block, and a rotating axis of the angle adjustment rotating block and a hinged axis of the angle adjustment motor both extend along a left-right direction.

Further, the angle adjustment drive mechanism includes an angle adjustment motor hingedly connected to the connecting bracket and an angle adjustment screw driven by the angle adjustment motor to rotate, a rotatable angle adjustment rotating block is mounted on the linkage base, the angle adjustment screw extends through the angle adjustment rotating block and is threadedly fit with the angle adjustment rotating block, and a rotating axis of the angle adjustment rotating block and a hinged axis of the angle adjustment motor both extend along a left-right direction.

Further, the angle adjustment rotating block includes a connecting portion and mounting portions located at left and right ends of the connecting portion, a threaded hole threadedly fit with the angle adjustment screw is disposed on the connecting portion, a pair of clamping blocks is fixed on the linkage base, the mounting portions at two ends of the angle adjustment rotating block are respectively located between the pair of clamping blocks and the linkage base, and rotational fit is performed both between the mounting portion and the clamping block and between the mounting portion and the linkage base by using arc surfaces.

Further, the linkage base includes two linkage side walls, namely, a left linkage side wall and a right linkage side wall, a hinged arm hingedly connected to the connecting bracket is disposed on each of the two linkage side walls, and the two linkage side walls are respectively fit with the guide plates in an up-down direction in a guiding manner.

To achieve the foregoing objectives, a vehicle in this application uses the following technical solution:
A vehicle includes a vehicle body and a dashboard assembly mounted on the vehicle body. The dashboard assembly includes a dashboard, a directional tubular column, and an adjustment structure configured to adjust heights and front and rear angles of the dashboard and the directional tubular column. The adjustment structure includes a base fixedly connected to the vehicle body and a connecting bracket connecting the dashboard and the directional tubular column, where the base includes two guide plates, namely, a left guide plate and a right guide plate, a linkage base is disposed between the two guide plates along an up-down direction in a guiding manner, the linkage base is hingedly connected to left and right sides of the connecting bracket by using a hinged part, a height adjustment drive mechanism used to drive the linkage base and the connecting bracket to move up and down is connected between the linkage base and the base, and an angle adjustment drive mechanism used to drive the connecting bracket to swing back and forth around the hinged part is connected between the linkage base and the connecting bracket.

Beneficial effects of the foregoing technical solution are as follows: This application belongs to an improved invention, and further defines the adjustment structure. Only one linkage base is disposed on the adjustment structure, thereby reducing a quantity of parts. Specifically, the linkage base is disposed between the two guide plates along an up-down direction in a guiding manner, and the linkage base is hingedly connected to the left and right sides of the connecting bracket by using the hinged part. The height adjustment drive mechanism is connected between the linkage base and the base. The height adjustment drive mechanism first exerts force on the linkage base, and the linkage base then transmits the force to the connecting bracket. Because the linkage base is located between the two guide plates, the force exerted on the connecting bracket is more centered in a left-right direction compared to the existing technology, so that a sticking risk can be reduced. In addition, the angle adjustment drive mechanism used to drive the connecting bracket to swing back and forth around the hinged part is connected between the linkage base and the connecting bracket. The angle adjustment drive mechanism is connected to one linkage base. Compared with the existing technology in which two linkage brackets need to be connected, a connection structure is simplified.

Further, there are a left guiding fit point and a right guiding fit point between the linkage base and the base, and a connecting portion between the height adjustment drive mechanism and the linkage base is located at a middle portion between the left guiding fit point and the right guiding fit point in a left-right direction.

Further, the connecting portion between the height adjustment drive mechanism and the linkage base is located at precise center between the left guiding fit point and the right guiding fit point in a left-right direction.

Further, the left guiding fit point and the right guiding fit point are respectively located on the left guide plate and the right guide plate.

Further, the height adjustment drive mechanism includes a height adjustment motor hingedly connected to the base and a height adjustment screw driven by the height adjustment motor to rotate, a rotatable height adjustment rotating block is mounted at a middle portion of the linkage base in a left-right direction, the height adjustment screw extends through the height adjustment rotating block and is threadedly fit with the height adjustment rotating block, and a rotating axis of the height adjustment rotating block and a hinged axis of the height adjustment motor both extend along a left-right direction.

Further, the height adjustment rotating block includes a connecting portion and mounting portions located at left and right ends of the connecting portion, a threaded hole threadedly fit with the height adjustment screw is disposed on the connecting portion, a pair of clamping blocks is fixed on the linkage base, the mounting portions at two ends of the height adjustment rotating block are respectively located between the pair of clamping blocks and the linkage base, and rotational fit is performed both between the mounting portion and the clamping block and between the mounting portion and the linkage base by using arc surfaces.

Further, the angle adjustment drive mechanism includes an angle adjustment motor hingedly connected to the connecting bracket and an angle adjustment screw driven by the angle adjustment motor to rotate, a rotatable angle adjustment rotating block is mounted at the middle portion of the linkage base in a left-right direction and on a side facing away from the height adjustment rotating block, the angle adjustment screw extends through the angle adjustment rotating block and is threadedly fit with the angle adjustment rotating block, and a rotating axis of the angle adjustment rotating block and a hinged axis of the angle adjustment motor both extend along a left-right direction.

Further, the angle adjustment drive mechanism includes an angle adjustment motor hingedly connected to the connecting bracket and an angle adjustment screw driven by the angle adjustment motor to rotate, a rotatable angle adjustment rotating block is mounted on the linkage base, the angle adjustment screw extends through the angle adjustment rotating block and is threadedly fit with the angle adjustment rotating block, and a rotating axis of the angle adjustment rotating block and a hinged axis of the angle adjustment motor both extend along a left-right direction.

Further, the angle adjustment rotating block includes a connecting portion and mounting portions located at left and right ends of the connecting portion, a threaded hole threadedly fit with the angle adjustment screw is disposed on the connecting portion, a pair of clamping blocks is fixed on the linkage base, the mounting portions at two ends of the angle adjustment rotating block are respectively located between the pair of clamping blocks and the linkage base, and rotational fit is performed both between the mounting portion and the clamping block and between the mounting portion and the linkage base by using arc surfaces.

Further, the linkage base includes two linkage side walls, namely, a left linkage side wall and a right linkage side wall, a hinged arm hingedly connected to the connecting bracket is disposed on each of the two linkage side walls, and the two linkage side walls are respectively fit with the guide plates in an up-down direction in a guiding manner.

### BRIEF DESCRIPTION OF THE DRAWINGS

FIG. 1 is a three-dimensional diagram from a perspective of Embodiment 1 of an adjustment structure for a dashboard assembly according to this application;
FIG. 2 is a rear view of Embodiment 1 of an adjustment structure for a dashboard assembly according to this application;
FIG. 3 is a left view of Embodiment 1 of an adjustment structure for a dashboard assembly according to this application;
FIG. 4 is a left cross-sectional view of Embodiment 1 of an adjustment structure for a dashboard assembly (a cross-sectional surface passes through a second slot on a fixing base on a left side) according to this application;
FIG. 5 is a three-dimensional diagram (a fixing base on a left side is not shown) from another perspective of Embodiment 1 of an adjustment structure for a dashboard assembly according to this application;
FIG. 6 is a cross-sectional view of a linkage base and two fixing bases in Embodiment 1 of an adjustment structure for a dashboard assembly according to this application;
FIG. 7 is a three-dimensional diagram of a connecting base in Embodiment 1 of an adjustment structure for a dashboard assembly according to this application;
FIG. 8 is a three-dimensional diagram from a perspective of a linkage base and two rotating blocks in Embodiment 1 of an adjustment structure for a dashboard assembly according to this application;
FIG. 9 is a three-dimensional diagram from another perspective of a linkage base and two rotating blocks in Embodiment 1 of an adjustment structure for a dashboard assembly according to this application; and
FIG. 10 is a three-dimensional diagram of an angle adjustment rotating block in Embodiment 1 of an adjustment structure for a dashboard assembly according to this application.

In the figures: 1. substrate; 1-1. first bent flange; 1-2. second bent flange; 2. fixing base; 2-1. guide plate; 2-2. second slotted hole; 2-3. second slot; 3. connecting base; 3-1. connecting arm; 3-2. connecting cylinder; 3-3. connecting plate; 4. mounting bracket; 4-1. dynamic locking plate; 5. linkage base; 5-1. linkage plate; 5-2. linkage side wall; 5-3. hinged arm; 5-4. hinged base; 5-5. first slot; 6. angle adjustment rotating block; 6-1. second connecting portion; 6-2. second threaded hole; 6-3. second mounting portion; 7. second clamping block; 8. height adjustment rotating block; 9. first clamping block; 10. height adjustment motor; 11. static locking plate; 11-1. first slotted hole; 12. angle adjustment motor; 13. angle adjustment screw; 14. directional tubular column; 15. mounting shaft; 16. air cylinder; 17. first pushing socket; 18. pad; 19. fixing nut; 20. second pushing socket; 21. adjustment nut; 22. locking nut; 23. crossbeam; 24. bolt; 25. guide socket; 26. ball; 27. first mounting seat; 28. first pin; 29. second mounting seat; 30. second pin; 31. height adjustment screw.

### DETAILED DESCRIPTION

For technical problems existing in an existing technology, a basic idea of this application is to dispose only one linkage base, so as to reduce a quantity of parts. In addition, the linkage base is located between two guide plates. A height adjustment drive mechanism is connected to the linkage base, so that force exerted on a connecting bracket is more centered. Also, an angle adjustment drive mechanism is connected to one linkage base, thereby simplifying a connection structure.

The following further describes features and performance of this application in detail with reference to embodiments.

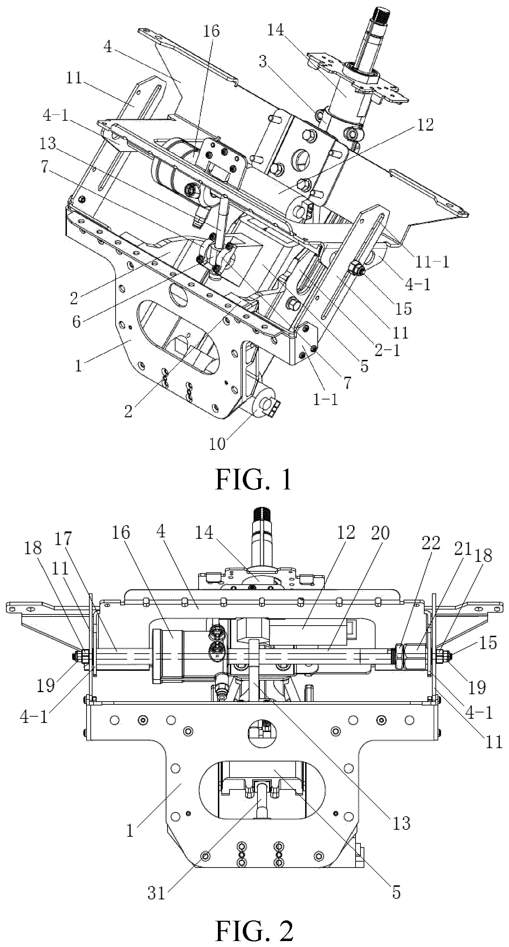

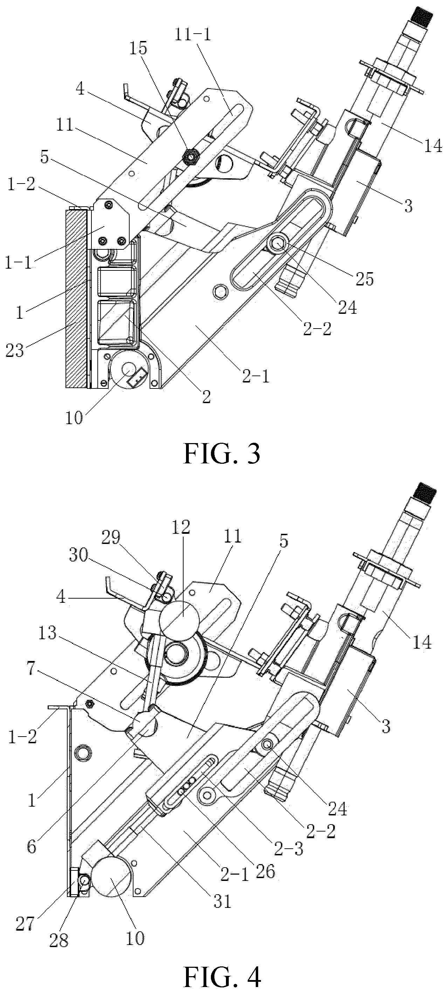

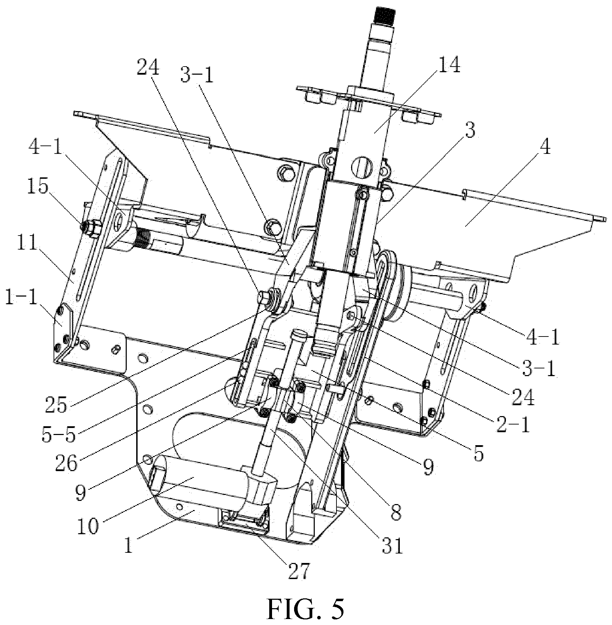

Embodiment 1 of an adjustment structure for a dashboard assembly in this application:
As shown in FIG. 1, FIG. 2, FIG. 3, FIG. 4, and FIG. 5, the adjustment structure for a dashboard assembly includes a base fixedly connected to a vehicle body and a connecting bracket connecting a dashboard and a directional tubular column 14. The base includes a substrate 1 and two fixing bases 2, namely, a left fixing base and a right fixing base, fixed on the substrate 1. Each of the two fixing bases 2 includes a guide plate 2-1, and two guide plates 2-1 are disposed in parallel on left and right sides. A connection structure fixedly connected to the vehicle body is disposed on the substrate 1. The connection structure is specifically a second bent flange 1-2. The substrate 1 is fixedly connected to a crossbeam 23 (shown in FIG. 3) in front of a vehicle cab by using the second bent flange 1-2.

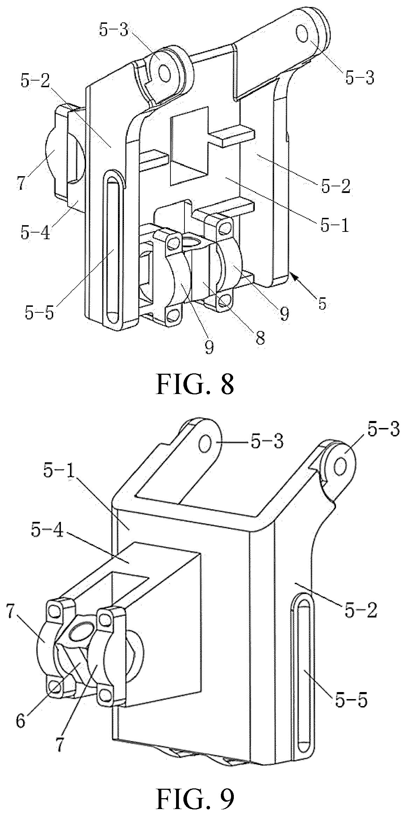

The connecting bracket includes a connecting base 3 connected to the directional tubular column 14 and a mounting bracket 4 that is fixed on the connecting base 3 and that is used to mount the dashboard. With reference to FIG. 1 to FIG. 5 and FIG. 7, the connecting base 3 includes two connecting arms 3-1, namely, a left connecting arm and a right connecting arm, and further includes a connecting cylinder 3-2 connected to the directional tubular column 14 and a connecting plate 3-3 connected to the mounting bracket 4. The two connecting arms 3-1 are located between the two guide plates 2-1, and a linkage base 5 is mounted between the two guide plates 2-1 in an up-down direction in a guide manner. With reference to FIG. 8 and FIG. 9, the linkage base 5 includes a linkage plate 5-1 and linkage side walls 5-2 connected to left and right sides of the linkage plate 5-1, hinged arms 5-3 are respectively disposed on the two linkage side walls 5-2, the two hinged arms 5-3 are respectively hingedly connected to the two connecting arms 3-1 by using hinged parts, and the hinged part is fit with the guide plate 2-1 in an up-down direction in a guiding manner, so that the linkage base 5 is hingedly connected to left and right sides of the connecting bracket by using the hinged part.

A height adjustment drive mechanism used to drive the linkage base 5, the connecting base 3, and the mounting bracket 4 to move up and down is connected between the linkage base 5 and the base. During adjustment, the height adjustment drive mechanism first exerts force on the linkage base 5, and then the force is transmitted from the linkage base 5 to the connecting bracket. Because the linkage base 5 is located between the two guide plates 2-1, compared with an existing technology, the force exerted on the connecting bracket is more centered in a left-right direction, so that a sticking risk can be reduced.

Specifically, the height adjustment drive mechanism includes a height adjustment motor 10 hingedly connected to the substrate 1 and a height adjustment screw 31 that is driven by the height adjustment motor 10 to rotate. A first mounting seat 27 is fixed on the substrate 1, and the height adjustment motor 10 is hingedly connected to the first mounting seat 27 by using a first pin 28. A rotatable height adjustment rotating block 8 is mounted at precise center of the linkage base 5 in a left-right direction, the height adjustment screw 31 extends through the height adjustment rotating block 8 and is threadedly fit with the height adjustment rotating block 8, and a rotating axis of the height adjustment rotating block 8 and a hinged axis (that is, an axis of the first pin 28) of the height adjustment motor 10 both extend along a left-right direction.

With reference to FIG. 8, the height adjustment rotating block 8 includes a first connecting portion and first mounting portions located at left and right ends of the first connecting portion. A first threaded hole threadedly fit with the height adjustment screw 31 is provided on the first connecting portion. A pair of first clamping blocks 9 is fixed on the linkage base 5, the first mounting portions at two ends of the height adjustment rotating block 8 are respectively located between the pair of first clamping blocks 9 and the linkage base 5, and rotational fit is performed both between the first mounting portion and the first clamping block 9 and between the first mounting portion and the linkage base 5 by using arc surfaces, thereby facilitating rotational mounting of the height adjustment rotating block 8, and a structure is simple.

In addition, there are a left guiding fit point and a right guiding fit point between the linkage base 5 and the base. In this embodiment, a connecting portion between the height adjustment drive mechanism and the linkage base 5 is located at precise center between the left guiding fit point and the right guiding fit point in a left-right direction. In this way, as long as the height adjustment drive mechanism is connected to the precise center of the linkage base 5 in a left-right direction, it can be ensured that force exerted on the linkage base 5 is centered in a left-right direction, so that the force transmitted to the connecting bracket is also centered in a left-right direction, thereby ensuring smooth movement of the linkage base 5 and the connecting bracket.

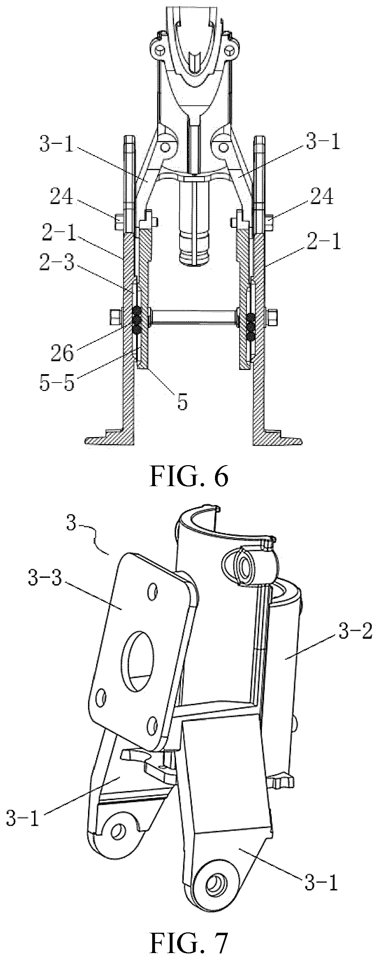

Specifically, the left guiding fit point and the right guiding fit point are respectively located on the left guide plate and the right guide plate 2-1. As shown in FIG. 6, FIG. 8, and FIG. 9, first slots 5-5 extending up and down are respectively disposed on wall surfaces that are of the two linkage side walls 5-2 and that are opposite to the two guide plates 2-1, second slots 2-3 extending up and down are respectively disposed on wall surfaces that are of the two guide plates 2-1 and that are opposite to the linkage side walls 5-2. The first slot 5-5 is disposed opposite to the second slot 2-3, and a ball 26 fit with a width of the slot is disposed in the slot. In this way, up-down guiding between the linkage base 5 and the guide plate 2-1 can be implemented, friction force during relative movement of the two can be reduced, and an extreme position of up-down motion of the linkage base 5 can be further determined.

As shown in FIG. 3 to FIG. 6, the foregoing hinged part includes a hinged shaft that extends through the guide plate 2-1, the connecting arm 3-1, and the hinged arm 5-3, and a guide socket 25 sleeved on the hinged shaft. In this embodiment, a bolt 24 is used as the hinged shaft. Through holes on the guide plate 2-1 and the connecting arm 3-1 are unthreaded holes, and a through hole on the hinged arm 5-3 is a threaded hole. The bolt 24 is fit with the threaded hole on the hinged arm 5-3. In this way, assembly is relatively convenient. Certainly, in other embodiments, all through holes on the guide plate 2-1, the connecting arm 3-1, and the hinged arm 5-3 may be unthreaded holes. After the bolt 24 extends through the three, a nut is then mounted. The through hole through which the bolt 24 extends, on the guide plate 2-1, is a second slotted hole 2-2 extending up and down, and the guide socket 25 is in contact with and is fit with a hole wall of the second slotted hole 2-2.

An angle adjustment drive mechanism used to drive the connecting base 3 and the mounting bracket 4 to swing back and forth around the bolt 24 is connected between the linkage base 5 and the mounting bracket 4. As shown in FIG. 1, FIG. 2, and FIG. 4, the angle adjustment drive mechanism includes an angle adjustment motor 12 hingedly connected to the mounting bracket 4 and an angle adjustment screw 13 driven by the angle adjustment motor 12 to rotate. A second mounting seat 29 is fixed on the mounting bracket 4, and the angle adjustment motor 12 is hingedly connected to the second mounting seat 29 by using a second pin 30.

As shown in FIG. 8 and FIG. 9, a hinged base 5-4 is disposed at a middle portion of the linkage base 5 in a left-right direction and on a side facing away from the height adjustment rotating block 8. A rotatable angle adjustment rotating block 6 is mounted on the hinged base 5-4. An angle adjustment screw 13 extends through the angle adjustment rotating block 6 and is threadedly fit with the angle adjustment rotating block 6. A rotating axis of the angle adjustment rotating block 6 and a hinged axis (that is, an axis of the second pin 30) of the angle adjustment motor 12 both extend along a left-right direction.

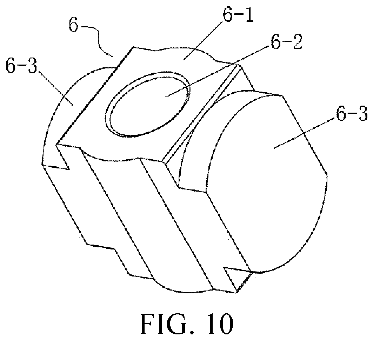

A structure of the angle adjustment rotating block 6 is the same as that of the height adjustment rotating block 8. With reference to FIG. 9 and FIG. 10, the angle adjustment rotating block 6 includes a second connecting portion 6-1 and second mounting portions 6-3 located at left and right ends of the second connecting portion 6-1, and a second threaded hole 6-2 threadedly fit with the angle adjustment screw 13 is provided on the second connecting portion 6-1. A pair of second clamping blocks 7 is fixed on the hinged base 5-4, the second mounting portions at two ends of the angle adjustment rotating block 6 are respectively located between the pair of second clamping blocks 7 and the hinged base 5-4, and rotational fit is performed both between the second mounting portion 6-3 and the second clamping block 7 and between the second mounting portion 6-3 and the hinged base 5-4 by using arc surfaces, thereby facilitating rotational mounting of the angle adjustment rotating block 6. A structure is simple.

As shown in FIG. 1 to FIG. 5, first bent flanges 1-1 are respectively disposed on left and right sides of the substrate 1, and a static locking plate 11 is connected to each of the first bent flanges 1-1. Dynamic locking plates 4-1 located between static locking plates 11 on two sides are disposed on left and right sides of the mounting bracket 4, and a pneumatic locking and supporting apparatus that can compress and fix the dynamic locking plate 4-1 on the static locking plate 11 on a corresponding side and release compression after ventilation is mounted on the dynamic locking plate 4-1 on each of the two sides. A working principle of the pneumatic locking and supporting apparatus is similar to that of an elastic pressing assembly of an air cylinder disclosed in the patent CN110466353B, and the pneumatic locking and supporting apparatus mainly includes a mounting shaft 15, an air cylinder 16, a first pushing socket 17, and a second pushing socket 20. The mounting shaft 15 extends through the dynamic locking plate 4-1 and the static locking plate 11, and two ends of the mounting shaft, which extend out from the static locking plate 11, are respectively sleeved with pads 18 and mounted with fixing nuts 19. The first pushing socket 17 is sleeved on the mounting shaft 15 and is located between one side of the air cylinder 16 and the dynamic locking plate 4-1. The second pushing socket 20 is sleeved on the mounting shaft 15 and is located between the other side of the air cylinder 16 and the dynamic locking plate 4-1. The second pushing socket 20 includes a thread segment, and an adjustment nut 21 and a locking nut 22 are mounted on the thread segment. A spring is disposed in the air cylinder 16. When air is not vented, the first pushing socket 17 and the adjustment nut 21 respectively press against the dynamic locking plates 4-1 on the two sides under the action of the spring, to compress and fix the mounting bracket 4 on the static locking plate 11. After the air is vented, compression performed by the first pushing socket 17 and the adjustment nut 21 is released, and the mounting bracket 4 can move relative to the substrate 1.

As shown in FIG. 1 and FIG. 3, a through hole through which the mounting shaft 15 extends, on the static locking plate 11, is a first slotted hole 11-1 extending up and down. There is a sufficient fit gap between the mounting shaft 15 and the first slotted hole 11-1, and the fit gap meets the requirement that the connecting base 3 and the mounting bracket 4 can swing back and forth around the bolt 24.

A working principle of an adjustment structure for a dashboard assembly in this application is as follows:
During use, when upper and lower heights of the directional tubular column and the dashboard need to be adjusted, first, ventilation to the air cylinder 16 is controlled, the mounting bracket 4 is unlocked, and the height adjustment motor 10 is turned on. The height adjustment motor 10 drives the height adjustment screw 31 to rotate, and the height adjustment rotating block 8 moves up and down along the height adjustment screw 31 under the action of a screw nut mechanism, so as to drive the linkage base 5, the connecting base 3, and the mounting bracket 4 to move up and down, thereby adjusting the heights of the directional tubular column and the dashboard. During the adjustment, the second slotted hole 2-2 on the guide plate 2-1 and the ball 26 between the linkage base 5 and the guide plate 2-1 guide the up-and-down movement of the linkage base 5, the connecting base 3, and the mounting bracket 4. After the adjustment is in place, the height adjustment motor 10 stops operating, and at the same time, the air cylinder 16 stops to supply air. The pneumatic locking and supporting apparatus compresses the dynamic locking plates 4-1 on the two sides, to fix positions of the directional tubular column and the dashboard.

When front and rear angles of the directional tubular column and the dashboard need to be adjusted, first, ventilation to the air cylinder 16 is controlled, the mounting bracket 4 is unlocked, and the angle adjustment motor 12 is turned on. The angle adjustment motor 12 drives the angle adjustment screw 13 to rotate, and the angle adjustment rotating block 6 moves linearly along the angle adjustment screw 13 under the action of a screw nut mechanism, so as to pull or push the mounting bracket 4 and the connecting base 3 to swing back and forth around the bolt 24, thereby adjusting the angles of the directional tubular column and the dashboard. A fit gap between the mounting shaft 15 and the first slotted hole 11-1 can meet swinging travel requirements of the mounting bracket 4 and the connecting base 3. After the adjustment is in place, the angle adjustment motor 12 stops operating, and at the same time, supply of air to the air cylinder 16 stops. The pneumatic locking and supporting apparatus compresses the dynamic locking plates 4-1 on the two sides, to fix positions of the directional tubular column and the dashboard.

In the height adjustment process, because the linkage base 5 is in a middle, and a force-bearing portion of the linkage base 5 is at the precise center in a left-right direction, and force exerted on the linkage base 5 is evenly transmitted to the connecting base 3, so that the force exerted on the connecting base 3 is more centered, thereby reducing a sticking risk. In addition, in the angle adjustment process, because the angle adjustment drive mechanism has only one output end, the angle adjustment screw 13 is connected to one linkage base 5, and a connection structure and a structure of the angle adjustment drive mechanism are simplified, so that configuration costs can be reduced, and assembly operations can be simplified. In addition, a connecting position between the angle adjustment screw 13 and the linkage base 5 is not at the precise center of the linkage base 5 in a left-right direction, but is slightly offset, however, the connecting position is still in the middle, which is because a weight of the dashboard is not balanced in a left-right direction. Therefore, the angle adjustment motor 12 and the angle adjustment screw 13 are disposed on a heavier side, so as to better drive the dashboard to swing back and forth.

In other embodiments of the adjustment structure for a dashboard assembly, no first bent flange may be disposed on the substrate, and the substrate is directly and fixedly connected to the vehicle body. In this case, a connection structure on the substrate is a connecting hole provided on the substrate.

In other embodiments of the adjustment structure for a dashboard assembly, the base may be an integral cast and formed part. In this case, the substrate and the fixing base are integrally connected.

In other embodiments of the adjustment structure for a dashboard assembly, the connecting bracket may alternatively be formed by integrally stamping and bending a plate, and no longer be formed by a connecting base and a mounting bracket that are separate.

In other embodiments of the adjustment structure for a dashboard assembly, the hinged shaft in the hinged part may alternatively be replaced with a pin. In this case, it is necessary to mount retaining rings or cotter pins at two ends of the pin, so as to prevent the pin from falling off. In other embodiments, no matter whether the bolt or the pin is used as the hinged shaft, no socket may be sleeved on the hinged shaft. In this case, the hinged shaft is directly fit with the slotted hole on the guide plate in a guiding manner.

In other embodiments of the adjustment structure for a dashboard assembly, a guiding and fit form between the linkage base and the guide plate may not be a slot and a ball. Instead, a guide slotted hole is provided on the guide plate. A pin is connected to the linkage base. The pin passes through the guide slotted hole, to implement guiding and fit between the pin and the base. In this case, the left guiding fit point and the right guiding fit point are still located on the left guide plate and the right guide plate.

In other embodiments of the adjustment structure for a dashboard assembly, the left guiding fit point and the right guiding fit point may not be on the left guide plate and the right guide plate. For example, a guide rod extending up and down is independently fixed on the substrate. The guide rod extends through the linkage base and can guide up-and-down movement of the linkage base.

In other embodiments of the adjustment structure for a dashboard assembly, the connecting portion between the height adjustment drive mechanism and the linkage base is located in a middle portion between the left guiding fit point and the right guiding fit point in a left-right direction, rather than at precise center. Certainly, in other embodiments, the connecting portion may alternatively be slightly offset from the middle portion. Compared with a complete offset in an existing technology, sticking of the connecting bracket can also be improved.

In other embodiments of the adjustment structure for a dashboard assembly, the connecting portion between the height adjustment drive mechanism and the linkage base may not be located at precise center of the linkage base in a left-right direction, but may be slightly offset. However, the connecting portion is still located in the middle portion. Compared with a complete offset in the existing technology, a force-bearing effect of the connecting bracket can still be improved.

In other embodiments of the adjustment structure for a dashboard assembly, the pneumatic locking and supporting apparatus may no longer be disposed, and the connecting bracket is enabled to maintain at a given position only by means of a self-locking action between the angle adjustment screw and the angle adjustment rotating block, and a self-locking action between the height adjustment screw and the height adjustment rotating block after the height adjustment motor and the angle adjustment motor stop operating. In this case, no static locking plate needs to be disposed.

In other embodiments of the adjustment structure for a dashboard assembly, a rotational mounting manner of the height adjustment rotating block and the angle adjustment rotating block may be fixing two lug plates on the linkage base. The two lug plates are provided with mounting holes into which ends of a rotating block extend. The mounting holes are complete circular holes. One of the lug plates is fixed on the linkage base in advance. After one end of the rotating block extends into the circular hole of the lug plate, the other lug plate is mounted and the other end of the rotating block extends into the circular hole of the lug plate. Certainly, rotation fit gaps exist between two ends of the rotating block and the circular holes.

In other embodiments of the adjustment structure for a dashboard assembly, the angle adjustment drive mechanism may alternatively be a drive mechanism outputting a telescoping action, such as an electric pushing rod, a liquid cylinder, or an air cylinder. In this case, a telescoping rod of the drive mechanism is directly and hingedly connected to the linkage base, or vice versa, a cylinder body of the drive mechanism is hingedly connected to the linkage base, and the telescoping rod is hingedly connected to the connecting bracket.

In other embodiments of the adjustment structure for a dashboard assembly, the height adjustment drive mechanism may alternatively be a drive mechanism outputting a telescoping action, such as an electric pushing rod, a liquid cylinder, or an air cylinder. In this case, a telescoping rod of the drive mechanism is directly and hingedly connected to the linkage base, or vice versa, a cylinder body of the drive mechanism is hingedly connected to the linkage base, and the telescoping rod is hingedly connected to the base.

In other embodiments of the adjustment structure for a dashboard assembly, a guiding fit manner between the hinged part and the guide plate may alternatively be that a slot extending up and down is provided on the guide plate, and an end of the hinged part extends into the slot and is fit with the slot in a guiding manner.

An embodiment of a dashboard assembly in this application is as follows: The dashboard assembly includes a dashboard, a directional tubular column, and an adjustment structure configured to adjust heights and front and rear angles of the dashboard and the directional tubular column. The adjustment structure is the same as the adjustment structure for a dashboard assembly in any one of the foregoing embodiments, and details are not described herein again.

An embodiment of a vehicle in this application is as follows: The vehicle includes a vehicle body and a dashboard assembly mounted on the vehicle body. The dashboard assembly includes a dashboard, a directional tubular column, and an adjustment structure configured to adjust heights and front and rear angles of the dashboard and the directional tubular column. The adjustment structure is the same as the adjustment structure for a dashboard assembly in any one of the foregoing embodiments, and details are not described herein again.

The above are only the preferred embodiments of this disclosure and are not intended to limit this disclosure. The scope to be protected by the disclosure is subject to the claims. Any equivalent structural changes made using the content of the description and drawings of this disclosure are not intended to limit this disclosure, and should be included in the scope to be protected by the disclosure as well.

## Claims

1. An adjustment structure for a dashboard assembly, comprising a base fixedly connected to a vehicle body and a connecting bracket connecting a dashboard and a directional tubular column, the base comprises two guide plates, namely, a left guide plate and a right guide plate, a linkage base is disposed between the two guide plates along an up-down direction in a guiding manner, the linkage base is hingedly connected to left and right sides of the connecting bracket by using a hinged part, a height adjustment drive mechanism used to drive the linkage base and the connecting bracket to move up and down is connected between the linkage base and the base, and an angle adjustment drive mechanism used to drive the connecting bracket to swing back and forth around the hinged part is connected between the linkage base and the connecting bracket.

2. The adjustment structure for a dashboard assembly according to claim 1, wherein there are a left guiding fit point and a right guiding fit point between the linkage base and the base, and a connecting portion between the height adjustment drive mechanism and the linkage base is located at a middle portion between the left guiding fit point and the right guiding fit point in a left-right direction.

3. The adjustment structure for a dashboard assembly according to claim 2, wherein the connecting portion between the height adjustment drive mechanism and the linkage base is located at precise center between the left guiding fit point and the right guiding fit point in a left-right direction.

4. The adjustment structure for a dashboard assembly according to claim 2, wherein the left guiding fit point and the right guiding fit point are respectively located on the left guide plate and the right guide plate.

5. The adjustment structure for a dashboard assembly according to any one of claims 2 to 4, wherein the height adjustment drive mechanism comprises a height adjustment motor hingedly connected to the base and a height adjustment screw driven by the height adjustment motor to rotate, a rotatable height adjustment rotating block is mounted at a middle portion of the linkage base in a left-right direction, the height adjustment screw extends through the height adjustment rotating block and is threadedly fit with the height adjustment rotating block, and a rotating axis of the height adjustment rotating block and a hinged axis of the height adjustment motor both extend along a left-right direction.

6. The adjustment structure for a dashboard assembly according to claim 5, wherein the height adjustment rotating block comprises a connecting portion and mounting portions located at left and right ends of the connecting portion, a threaded hole threadedly fit with the height adjustment screw is disposed on the connecting portion, a pair of clamping blocks is fixed on the linkage base, the mounting portions at two ends of the height adjustment rotating block are respectively located between the pair of clamping blocks and the linkage base, and rotational fit is performed both between the mounting portion and the clamping block and between the mounting portion and the linkage base by using arc surfaces.

7. The adjustment structure for a dashboard assembly according to claim 5, wherein the angle adjustment drive mechanism comprises an angle adjustment motor hingedly connected to the connecting bracket and an angle adjustment screw driven by the angle adjustment motor to rotate, a rotatable angle adjustment rotating block is mounted at the middle portion of the linkage base in a left-right direction and on a side facing away from the height adjustment rotating block, the angle adjustment screw extends through the angle adjustment rotating block and is threadedly fit with the angle adjustment rotating block, and a rotating axis of the angle adjustment rotating block and a hinged axis of the angle adjustment motor both extend along a left-right direction.

8. The adjustment structure for a dashboard assembly according to any one of claims 1 to 4, wherein the angle adjustment drive mechanism comprises an angle adjustment motor hingedly connected to the connecting bracket and an angle adjustment screw driven by the angle adjustment motor to rotate, a rotatable angle adjustment rotating block is mounted on the linkage base, the angle adjustment screw extends through the angle adjustment rotating block and is threadedly fit with the angle adjustment rotating block, and a rotating axis of the angle adjustment rotating block and a hinged axis of the angle adjustment motor both extend along a left-right direction.

9. The adjustment structure for a dashboard assembly according to claim 8, wherein the angle adjustment rotating block comprises a connecting portion and mounting portions located at left and right ends of the connecting portion, a threaded hole threadedly fit with the angle adjustment screw is disposed on the connecting portion, a pair of clamping blocks is fixed on the linkage base, the mounting portions at two ends of the angle adjustment rotating block are respectively located between the pair of clamping blocks and the linkage base, and rotational fit is performed both between the mounting portion and the clamping block and between the mounting portion and the linkage base by using arc surfaces.

10. The adjustment structure for a dashboard assembly according to any one of claims 1 to 4, wherein the linkage base comprises two linkage side walls, namely, a left linkage side wall and a right linkage side wall, a hinged arm hingedly connected to the connecting bracket is disposed on each of the two linkage side walls, and the two linkage side walls are respectively fit with the guide plates in an up-down direction in a guiding manner.

11. A dashboard assembly, comprising a dashboard, a directional tubular column, and an adjustment structure configured to adjust heights and front and rear angles of the dashboard and the directional tubular column, **characterized in that** the adjustment structure is the adjustment structure for a dashboard assembly according to any one of claims 1 to 10.

12. A vehicle, comprising a vehicle body and a dashboard assembly mounted on the vehicle body, the dashboard assembly comprises a dashboard, a directional tubular column, and an adjustment structure configured to adjust heights and front and rear angles of the dashboard and the directional tubular column, **characterized in that** the adjustment structure is the adjustment structure for a dashboard assembly according to any one of claims 1 to 10.
